# EUROPEAN PATENT SPECIFICATION

(11) **EP 3 430 195 B1**
(45) Date of publication and mention of the grant of the patent: **03.01.2024**
(21) Application number: 17766005.7
(22) Date of filing: 13.03.2017
(51) Int. Cl.: D07B 1/14, G01V 1/20, D04C 3/48, G01K 7/36

(54) **METHOD FOR ASCERTAINING A FIBER ROPE TEMPERATURE**
VERFAHREN ZUR BESTIMMUNG DER TEMPERATUR EINES FASERSEILS
MÉTHODE POUR DÉTERMINER LA TEMPÉRATURE D'UN CORDAGE EN FIBRE

(30) Priority: 13.03.2016 US 201662307546 P; 12.05.2016 US 201662335670 P
(43) Date of publication of application: 23.01.2019
(73) Proprietor: Hampiðjan HF., 104 Reykjavík (IS)
(72) Inventor: ERLENDSSON, Hjortur, IS-201 Kopavogur (IS); MAGNUSSON, Jon Atli, 220 Hafnarfjordur (IS)
(74) Representative: Arnason Faktor
(86) International application number: PCT/IS2017/050005
(87) International publication number: WO 2017/158628

(56) References cited:
- EP-A1- 0 849 208
- EP-A1- 3 299 331
- EP-A2- 2 913 434
- WO-A1-2016/059652
- WO-A1-2016/059652
- WO-A2-2016/037207
- DE-A1- 3 205 460
- GB-A- 1 481 704
- JP-A- S5 740 622
- JP-A- S5 796 229
- JP-A- S63 300 926
- JP-A- 2005 248 405
- US-A1- 2005 077 890
- US-A1- 2006 219 528
- US-A1- 2008 105 059
- US-A1- 2008 105 059

## Description

### FIELD OF INVENTION

The present disclosure generally relates to the field of marine seismology, in which a moving ship generates seismic waves and detects reflections, and in particular to improving the reliability of ropes towed by these ships. More specifically the present disclosure relates to methods for monitoring the temperature of distinct portions of a rope arranged with internal individual magnets.

### Definitions:

"**Super Wide**" is a rope used by a vessel at sea or in a water or marine environment to tow upon a towed array and its components, or to tow upon something connected to a towed array and its components or to tow upon something connected to at least a portion of a towed array and its components, such as a paravane and/or deflector. The rope preferably is formed mainly of synthetic fibers, but can include natural fibers such as steel, conductors and other items and even instrumentation. The term "**Super Wide**", the term "**Superwide**", and the term "**Superwide tow warp**" shall have the same meaning. There are several other names for a rope used for this purpose, including but not limited to "paravane line", "seismic line", "tow warp" and others.

### TECHNICAL BACKGROUND AND KNOWN ART

It is well known that most oil companies rely on seismic interpretation to select sites for drilling exploratory oil wells. Seismic data acquisition is routinely performed both on land and at sea. At sea, a seismic ship deploys a streamer or cable behind the ship as the ship moves forward. Multiple receivers are typically towed behind the ship on streamers in an array. Streamers typically include a plurality of receivers. A seismic source is also towed behind the ship, with both the source and receivers typically deployed below the surface of the ocean or sea. Streamers typically include electrical or fiber-optic cabling for interconnecting receivers and seismic equipment on the ship. Streamers are usually constructed in sections 25 to 100 meters in length and include groups of up to 35 or more uniformly spaced receivers. The streamers may be several miles long, and often a seismic ship trails multiple streamers, with a desired uniform lateral separation between the streamers, to increase the amount of seismic data collected. The number and length of streamers to be deployed, as well as the lateral separation to be maintained between streamers, dictates the size of deflectors, or paravanes, that must be deployed with the array, which in turn also has a major impact on the drag load of the seismic ship.

The array is ultimately spread apart by lateral forces generated by the deflectors, paravanes, or their substitutes, that in turn are connected to and towed upon by the vessel by superwides, also known as superwide tow warps, and other terms. Operating at a typical production speed of 4 to 5 knots and towing in excess of 50 tons of instrument-laden equipment in the water, tension on the superwides is both of large magnitude and also of long duration. This fact, coupled with the fact that vibrations travelling along the superwide tow warp must necessarily have a highest velocity and lowest amplitude at the least movable location along the tow warp, that being where the tow warp exits a sheave, drum and/or winch, much energy is dissipated into this location of the tow warp and is expressed as heat.

Operating environmental conditions often are such that external temperatures and other factors preclude discharge of this heat energy at a rate fast enough to ensure no net accumulation of heat energy. As a result, heat accumulates preferentially into this portion of the tow warp, and causes the tow warp to become heated in this location of the tow warp, more than it is heated on other locations along the tow warp.

Efforts to cool the tow warp at this location do reduce the effect of the heat accumulation in this location of the tow warp. However, nonetheless, known means for reducing the heat accumulating in this portion of the tow warp are not always adequate for cooling inner regions of the tow warp, that are distal from the surface of the tow warp, and are not always able to prevent excessive heat buildup, especially at or near the core and/or inner most regions of the tow warps strength member, especially in warm and tropical environments.

Consequently, the tow warps continue to experience failure predominantly in this location.

Furthermore, even in cold environments, due to the fact that the heat accumulation is concentrated into the specific portion of the tow warp mentioned supra, this portion of the tow warp is experiencing more heat accumulation that do other portions of the tow warp, and is thus prone to failure sooner in comparison to other portions of the tow warp. It is thus important to be able to monitor the heat of this portion of the tow warp as it is directly related to degradation incurred at this location of the tow warp, that is the location along the tow warp that is most prone to failure.

When a superwide fails without warning, there is a tremendous imbalance to the towed array systems, resulting in the often miles long streamers and other components of the array tangling. Such events necessitate halting of survey operations and cause substantial downtime and economic loss. Importantly, there also are high safety risks to personnel resultant of unexpected failure of the superwides, with fatalities having occurred.

For the above stated reasons, it has long been a desire in the industry to be able to accurately detect, monitor and chart the heat of a superwide tow warp at distinct locations along the tow warp, and especially at or near the core of the tow warp at those distinct locations.

It is most important to monitor heat at or near the core of the tow warp, and especially at or near the core of the strength member forming the tow warp, because those portions of the tow warp furthest from its exterior surface are less able to dissipate heat and thus experience failure sooner than do other portions of the tow warp. When a tow warp commences to fail at its core and/or at or near the innermost region of the strength member forming the tow warp, failure of the remainder of the tow warp at that point along the length of the tow warp is inevitable.

However, as the tow warp is under sometimes an excess of seventy tones tension, there is no way to visually inspect the integrity of the inner most region of the strength member forming the tow warp. Thus, some means for remotely detecting a value that is related to the integrity of the innermost region of the strength member forming a tow warp at specific location along the tow warp so as to permit prediction of failure of the tow warp is a need long felt in the industry.

Thus, a means for reliably ascertaining and monitoring the heat of the tow warp during use of the tow warp in field operations, and especially the heat at or near the center and/or core of the strength member forming the tow warp, would answer a need long felt in the industry.

Thus far, none of the known art has proposed a solution to this need.

Hence, there exists a long felt need for a construction and method that permits monitoring the heat of a superwide tow warp, at distinct locations along the superwide tow warp, and especially at or near the center and/or core of the superwide tow warp at those distinct locations, thereby permitting prediction and thus advance warning of likely catastrophic failure of the superwide tow warp

US 2008/105059 A1 discloses a hollow braided rope comprising synthetic fibers as tensile load bearing elements with a core in the form of a tube filled with a silicone material and comprising magnets distributed along the length of the tube at a gauge length. The magnets are part of a rope strain gauge sensor system.

### OBJECTS OF THE PRESENT DISCLOSURE:

It is an object of the present disclosure to provide for method that permits detection and also monitoring of the amount of heat being experienced by distinct portions of a rope having a strength member formed mainly from synthetic fibers, especially of the superwide tow warp, so as to permit prediction of likely failure of the superwide tow warp.

It is yet another object of a preferred embodiment of the present disclosure to provide for a method for the use of a construction for a rope having a strength member formed mainly from synthetic fibers, especially for a superwide tow warp that permits detection and monitoring the amount of heat being experienced by the superwide tow warp at distinct portions of the superwide tow warp, prior to the heat causing sufficient destruction of the superwide tow warp to result in failure of the superwide tow warp. where such superwide tow warp construction is reliable in applications that require passing through high tension sheaves, and that can tolerate winding upon high tension drums and winches, especially where tensions greater than forty metric tons are applied to the tow warp.

The objects of the disclosure are addressed by the present invention which is defined in the claims.

### BRIEF DESCRIPTION OF THE PRESENT DISCLOSURE:

Briefly, the present invention is based upon the unexpected discovery that catastrophic failure of a superwide during use can be predicted and avoided by a method including steps of:
subjecting a rope incorporating magnets at distinct locations within the rope and along the long dimension of the rope to a range of temperatures, until, in each case, the rope reaches each of various distinct temperatures; next, measuring a force associated with the magnet or magnets at each distinct location along the rope; subsequently recording both the temperature value measured as well as the value of the measured specific force generated by the magnet and measured at the same time that the temperature value was measured; and, next, forming a database correlating the specific measured force values to specific rope temperatures; and later, during use of the rope, measuring the same type of force associated with the magnets as was already measured when forming the database; and, next, correlating the value and/or values of the measured force that was measured during use of the rope to a temperature previously identified in the prior steps as a temperature that corresponds to a certain force value measured, that the heat value and especially the temperature of the rope at distinct locations along the rope and at and/or near the core of the rope is able to be determined at will and monitored over time, so as to permit predicting and avoiding catastrophic failure of the rope.

In more detail, the present invention is based upon the discovery that by subjecting a rope incorporating magnets at distinct locations within the rope and along the long dimension of the rope to a range of temperatures, until, in each case, the rope reaches each of various distinct temperatures; and measuring a signal associated with the magnet or magnets at each distinct location along the rope (such signal may be a force, in particular a magnetic force, or magnetic flux, or magnetic moment, or other); and then subsequently recording the temperature value measured and the value of the measured specific signal generated by the magnet and measured at the same time that the temperature value was measured; and forming a database correlating the specific signal value measured at a specific temperature that the rope was at when the signal value was measured, for several different temperatures of the rope; and then by subsequently using the rope in its intended application, that by monitoring at least those portions of the rope containing distinct magnets, and specifically by measuring at a later time and during use of the rope the same type of signal already measured when forming the database, and by correlating the value and/or values of the measured signal to a temperature identified in the prior steps as a temperature that corresponds to the force value measured, that the heat value and especially the temperature of the rope at distinct locations along the rope and at and/or near the core of the rope is able to be determined at will and monitored over time, so as to permit predicting and avoiding catastrophic failure of the rope.

In this way, the heat of distinct portions of the rope, at the center of the rope (when that is where the magnets are situated), can be determined, and the likelihood of the materials forming the rope failing, and thus the rope itself failing, depending upon what type of material and/or combination of materials is used in forming the rope, is able to be evaluated and predicted. Thus, the rope can be serviced, and portions of the rope deemed to be experiencing excessive heat replaced, or no longer used at a critical location, especially a location where heat is preferentially imparted to the rope in comparison to other portions of the rope, so as to extend the rope's service life in comparison to the rope's service life when it is not possible to accurately determine the heat of the rope at distinct locations along the rope at and/or near the core of the rope.

The present disclosure requires combining the method for determining the temperature of the rope taught above and herein with a rope formed with magnets, preferably in a certain construction as to be taught herein for forming the present disclosure's rope.

In one preferred construction of a rope of the present disclosure the rope is formed by incorporating into a braided rope formed of high strength fibers such as UHMWPE a series of magnets interspaced at distinct locations along the rope where the magnets are aligned so that the north pole of one magnet faces the south pole of an adjacent magnet, for all the magnets in the rope. When the magnets are so aligned, it is anticipated that a Gaussmeter is a useful meter for reading the magnetic force (including flux or moment). Alternatively, the magnets forming the rope may be aligned so that an imaginary straight line bisecting the north pole and the south pole of each magnet is perpendicular and/or nearly perpendicular to the long axis of the rope when the rope is straight (i.e. is not bent). Subsequent to forming the rope, and in order to complete the present disclosure's teachings, after forming the present disclosure's rope, the methods stated supra for ascertaining the temperature of the rope at distinct locations along the rope are enacted.

One preferred construction of the rope includes a Creep Tolerant Magnetized Core formed of, preferably, a solid (i.e. not hollow) plastic and preferably thermoplastic rod that both fills out the centrally located internal void space that naturally occurs within a strength member constructed from a hollow braided rope and that also includes magnets both within the solid plastic rod as well as interspaced at distinct locations positioned along the long dimension of the solid plastic rod. The magnets are preferably super magnets. By situating the magnets within the above taught construction for a solid rod of plastic and preferably thermoplastic material and forming a hollow braided strength member about such solid plastic rod that incorporates magnets within the solid plastic rod, and by aligning the magnets so as to have their polarity aligned as taught supra, a superwide is formed that is able, by enacting method teaching of the present disclosure, to be effectively monitored for temperature and heat, as well as for creep, while not compromising the breaking strength of the superwide.

The presently preferred fibers for the high strength fibers forming the hollow braided strength member are HMPE and/or UHMWPE. In some instances, HMPE and/or UHMWPE may be usefully combined with any of Aramid and/or Para-Aramid, such as Technora^{®}, and/or PBO, LCP or other fibers.

The above stated advantages of the present disclosure, as well as other advantages of the present disclosure, no doubt shall become readily apparent to those skilled in the art from the following detailed description of a preferred embodiment including when considered in light of the accompanying drawings in which:

### Brief Description of the Drawings:

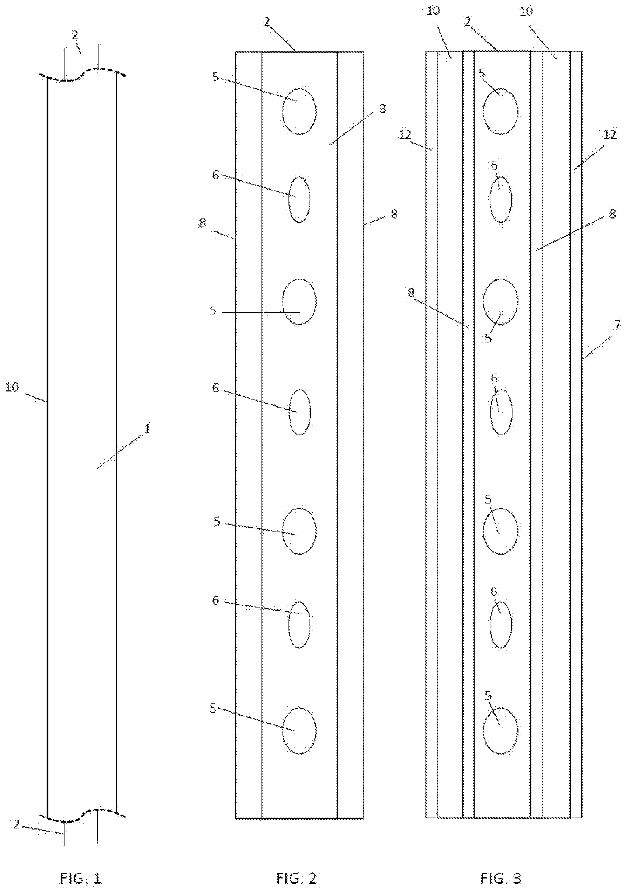

FIG. 1 is a top plan and expanded view of the pre-processed rope of Heat Indicating Fiber Rope of the present disclosure where a portion of the strength member has been cut away to reveal the Creep Tolerant Magnetized Core enclosed by the strength member;
FIG. 2 is a side plan view of a portion of the solid plastic rod of FIG. 1 where the Creep Tolerant Magnetized Core has been cut in half along its long dimension, such as in a fillet cut, to reveal the magnets contained within the solid plastic rod and other structure of the Creep Tolerant Magnetized Core;
FIG. 3 is a top plan view of an alternative construction of the Creep Tolerant Magnetized Core of FIG. 1 where additional flow shields and additional layer of plastic material are used.

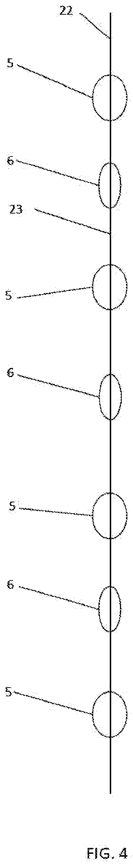

FIG. 4 is a side plan view of an assembly that can be included into the Creep Tolerant Magnetized Core of FIG. 2 and FIG. 3 where the magnets have been coupled to a line, such as a filament, string, yarn, thread, tape or the like, or included and encapsulated within a hollow braided sheath formed preferably of thermoplastic fibers such as Polyethylene, prior to being included within or coupled to the solid plastic rod.

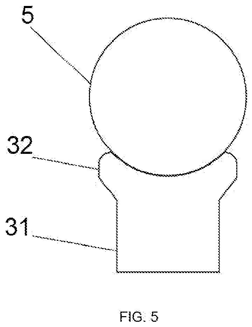

FIG. 5 is a side plan cross sectional view of an end portion of an actuator ram 31 belonging to an actuator used in forming the rope of the present disclosure. The actuator ram has a concave head 32 shaped so as to be able to hold a spherical and/or quasi-spherical shaped magnet 5, where the magnet may be coated, such as with a resin, and that may be coupled to an RFID tag with the resin or other coating substance so as to create a spherical and/or quasi-spherical shape including both the magnet and the RFID tag.

### DETAILED DESCRIPTION OF THE PREFERRED EMBODIMENT:

As shown in FIG. 1: the pre-processed phase of the Heat Indicating Fiber Rope 10 of the present disclosure, that is the rope assembly of the present disclosure prior to it's being subjected to the tension and heat processing steps taught herein and above, includes a strength member 1 and a Creep Tolerant Magnetized Core 2. The strength member 1 preferably is formed mainly of synthetic fibers, especially HMPE and/or UHMWPE. The strength member may be enclosed within a cover (not shown), as is preferable, such as may be a tightly braided sheath formed also of HMPE or, in some applications, another suitable synthetic fiber, such a Kevlar^{®}. The cover is applied to the strength member by coverbraiding (i.e. "overbraiding") the strength member after completion of tension and heat processing steps, including after the rope assembly has been finally cooled following the heating steps.

The strength member 10 preferably is formed by a hollow braided construction, also known as a hollow braid, and encloses the Creep Tolerant Magnetized Core 2 by being braided around the Creep Tolerant Magnetized Core 2 such as by first forming the Creep Tolerant Magnetized Core 2 and then passing it through a braiding machine designed to form hollow braids, so that the strength member is braided around the Creep Tolerant Magnetized Core. A minimum of twelve (12) carriers are considered useful so as to result in a minimum of twelve (12) primary strands forming the strength member's hollow braided construction. Multiple rope construction types are useful for forming the strength member, especially those that apply to hollow braid rope constructions.

As shown in FIG. 2, the Creep Tolerant Magnetized Core of FIG. 1 includes a plurality of magnets. While ceramic and all magnet types are likely useful, the Creep Tolerant Magnetized Core preferably is formed of a combination of super magnets 5 and RFID tags 6. The super magnets are preferably permanent magnets formed of neodymium or formed of an alloy of neodymium, iron, and boron to form the Nd₂Fe₁₄B crystalline structure, and can be nickel plated.

The solid plastic rod portion 3 of the Creep Tolerant Magnetized Core 2 preferably is formed mainly of thermoplastic material, and preferably entirely of thermoplastic material, preferably Polyethylene (PE). It may be desired in some instances to blend the PE with elastomer, such as from one percent to fifteen percent elastomer. The Creep Tolerant Magnetized Core also includes an outer sheath 8 that forms flow shield sheath 8. The flow shield sheath 8 is formed of any useful construction and material that permits the flow shield sheath 8 to be capable of stopping and/or mainly stopping molten phases of the thermoplastic material from exiting the flow shield sheath 8 at temperatures at which the thermoplastic material is molten. Presently, the flow shield sheath 8 preferably is formed of tightly braided polyester threads (including yarns and strands) and/or fibers tightly wrapped and braided around the outer surface of the solid plastic rod, where the flow shield sheath is capable of stopping and/or mainly stopping molten phases of the thermoplastic material from exiting the flow shield sheath (8) at temperatures at which the thermoplastic material is molten.

FIG. 3 shows a construction for an alternative Creep Tolerant Magnetized Core 7 of the present disclosure that is assembled by first forming the Creep Tolerant Magnetized Core 2 of FIG. 2 as taught above and subsequently enclosing the Creep Tolerant Magnetized Core 2 taught in FIG. 2 above within a sleeve of an additional layer 10 of plastic material, that preferably is thermoplastic material, so as to form an outer sleeve 10 of thermoplastic material about flow shield sheath 8, so that outer sleeve 10 thus forms a plastic tube within which is the Creep Tolerant Magnetized Core of FIG. 2; and, subsequent to forming outer sleeve plastic layer 10, forming an additional flow shield sheath 12 about outer sleeve plastic layer 10, also preferably of tightly braided polyester threads and/or fibers. The volume selected for the plastic material forming outer sleeve plastic layer 10 preferably is greater than the volume selected for the plastic portion of rod 3. The plastic portion of rod 3 may preferably be a blend of thermoplastic and elastomer, such as from one to fifteen percent elastomer and ninety-nine to eighty-five percent thermoplastic and especially PE, while the outer sleeve plastic layer preferably is either entirely thermoplastic material, or mainly thermoplastic material, with PE being a preferred thermoplastic. In some instances it may be desired to blend PE with elastomer in forming outer sleeve layer 10. However, it is preferred in this instance that the percentage of elastomer in the PE / elastomer blend forming outer sleeve layer 10 is lesser than the percentage of the elastomer in the PE/ elastomer blend forming plastic portion of rod 3.

In both the Creep Tolerant Magnetized Cores 2 and 7 of FIG. 2 and FIG. 3, respectively it is preferred that the magnets are either round shaped or oblong in shape. The magnets are preferably enclosed in a layer of elastomer or mainly elastomer material capable of tolerating the heat and temperature at which the thermoplastic material of cores 2 and 7 are molten (semi-liquid). For example, the magnets may be coated with an elastomer containing substance to form round or oblong shaped objects. The magnets may be coated with a thermoplastic or thermoplastic containing substance having a same or, preferably, slightly higher softening temperature than the softening temperature of the thermoplastic substances forming Creep Tolerant Magnetized Core.

The magnets and any RFIDs and/or other magnets can be positioned into the primary core 2, that preferably is a rod of PE or of mainly PE, by injecting them into molten PE that is situated at the head of an extruder of a die used in forming the extruded PE rod. The injection of the magnets is accomplished by use of a simple piston coupled with a magazine pre-loaded with several of the magnets. If both super magnets as well as RFID tags are to be injected, then two distinct piston and magazine combinations are used, one for the super magnets and another one for the RFID tags. The die and the piston or pistons preferably are formed of metal which is not magnetic. The magnets can be injected into the molten PE at the head of the extruder die in a fashion so that alternatively are extruded a super magnet and next an RFID, and then again a magnet and next again an RFID, repeatedly, to result in a series of magnets contained within the PE or other thermoplastic rod forming the rod of the creep altering core 2 that alternate between magnets including super magnets and RFIDs.

In order to accomplish another aspect of a most preferred embodiment of the present disclosure, that aspect being that the super magnets are aligned north to south with respect to one another, i.e. the north pole of each magnet faces the south pole of one of its adjacent magnets while its south pole faces the north pole of the other of its adjacent magnets, while also accomplishing to automate the positioning of the magnets within the rope's core, the following process and apparatus is preferred:
With reference to FIG. 5:
Step 1: An actuator ram 31 is provided. The actuator has an actuator head 32. The actuator head 32 is concave, and preferably cupped, for example, the concave can define a third of a sphere in concave form or less than half of a sphere in concave form. Various concave forms are useful for the actuator head 32. The actuator's cupped head is formed of a non-magnetic material such as plastic or copper in order to, during a further step to be described in greater detail below, allow release of a magnet temporarily situated in the actuator head to frictional forces created by internal surfaces of a hollow braided sheath being formed by a braiding machine. The actuator head 32 is constructed so as to have a temporary magnet situated at the bottom of the actuator head, preferably at the bottom of the cupped actuator head, and preferably so that the temporary magnet is recessed below the bottom of the actuator head's cupped form.

In order to situate the magnets into a structure used to form a core of the present disclosure for a rope of the present disclosure the following process is employed:
Step 2: the actuator, and a reservoir containing a selected type of magnets, are first positioned below the braid point of a braiding apparatus (i.e. a braiding machine) capable of forming a hollow braided sheath. At least the actuator is centrally situated with respect to the orbiting cars of the braiding machine. That is, the actuator is situated in such a position so that, during manufacture steps, when the actuator ram's arm is extended so as to become elevated, it becomes inserted into a hollow braided sheath being formed by the braiding machine.
Step 3: the actuator ram, that preferably is formed as a retractable and extendable ram, is vertically oriented, and in the preferred method is always vertically oriented.
Step 4. Magnets from the reservoir are fed one by one to be situated within the cupped actuator head. An injection piston may be used to so feed the magnets.
Step 5. Next, the temporary magnet situated recessed below the lower inner surface of the cupped actuator head is now energized, and consequently rotates the magnetic ball to a predetermined orientation relative to its north and south poles. As taught herein, the magnet preferably is a magnetic ball but also may be a quasi-spherically shaped magnet, or other shaped magnet.
Step 6. While maintaining the temporary magnet that is situated recessed below the lower inner surface of the cupped actuator head in an energized state, the actuator head is elevated and/or extended a distance so as to cause it to be inserted into, and beyond, the braid point of converging braid strands forming a hollow braided sheath. As a consequence, the actuator head becomes inserted into the interior passage of the hollow braided sheath being formed by the braiding machine.

As stated above, in order to accomplish this, the actuator ram is positioned below the braid point of a braiding machine, where at least the long axis of the actuator ram 31 terminating in the actuator head 32 is centrally situated with respect to the orbiting cars of the braiding machine, and directed upward and aimed at the braid point, in such a position so that when the actuator ram is extended so as to be elevated it becomes inserted into the hollow braided sheath being formed by the braiding machine.

Step 7. The temporary magnet situated recessed at the bottom of the cupped actuator head is de-energized, i.e. the electric current flow to the actuator head is ceased. This causes the actuator head to no longer have magnetic attraction to the magnet it is holding. Because the temporary magnet is sitting still below the cupped actuator head's concave bottom surface, it does not attract the magnetic being inserted to the braid.

Step 8. The actuator head is retracted from within the hollow braided sheath, and the process repeated. As a result of being retracted while the temporary magnet situated recessed below the lower inner surface of the cupped actuator head is de-energized, the friction of the hollow braided sheath around the magnet retains the magnet within the hollow braided sheath. To facilitate this step, the sheath is formed with an internal void that has a lesser diameter than the diameter of the magnets selected. Most preferably, the magnets are selected with an external diameter greater than the diameter of the hollow braided sheath being formed. Due to the funnel of the converging braid strands forming the braided sheath as they funnel into the braid point, the actuator head, and the magnet, are able to be inserted into a position either within the hollow braided sheath, if the strands forming the sheath are sufficiently elastic or able to experience constructional expansion, or, are positioned just where the strands forming the hollow braided sheath begin to all meet, and therefore the magnet is grabbed by the strands and retained into the sheath's interior passage when the actuator ram and its head are retracted.

By regulating the frequency by which the actuator inserts magnets into the hollow braided sheath being formed, and by regulating the speed of the braiding machine, the distance between adjacent magnets held within the hollow braided sheath is regulated.

By selecting either a positive or a negative electrical current for energizing of the actuator head in step 8, a specific alignment for the magnets, relative to their north and south poles, is selectable and established so that the magnet are, in each case, grabbed by the interior walls of the braided sheath while they are in the desired alignment.

Preferably, the strands forming the braided sheath are themselves formed of a thermoplastic polyethylene.

Step 9: Next, the product resultant of steps 1 to 7 above, that is a hollow braided sheath incorporating a magnet at several distinct predetermined locations spatially separated along the length of the hollow braided sheath, where the magnets are aligned so that the north pole of one magnet faces the south pole of an adjacent magnet, is used by having a thermoplastic layer extruded around it so that the hollow braided sheath incorporating the magnets and the thermoplastic layer extruded around it, that also enters into void spaces within the sheath, together form a bar. This bar is a Creep Tolerant Magnetized Core useful for forming the Heat Indicating Rope of the present disclosure.

In order to Use the Creep Tolerant Magnetized Core to Make a Heat Indicating Fiber Rope of the present disclosure:
Firstly, a Creep Tolerant Magnetized Core as taught above and herein is formed;
Secondly, a strength member is formed around the Creep Tolerant Magnetized Core. The strength member is preferably formed of a hollow braided construction, and preferably has at least twelve primary strands using known rope construction formulae. This is accomplished by feeding the selected Creep Tolerant Magnetized Core through a braiding machine designed to form hollow braided ropes, where the braiding machine has at least twelve cars where each car has a bobbin loaded with one of the primary strands used in forming the hollow braid constructed strength member. Preferably the strength member is formed mainly or entirely of synthetic fibers, and preferably HMPE and/or UHMWPE and in some cases a blend of Aramid and UHMWPE;
Thirdly, the strength member is dried such as with hot blown air so as to remove excess of moisture from the strength member;
Fourthly, optionally, but preferably, the strength member is submerged or otherwise contacted with an adhesive substance such as a urethane or other substances commonly known in the industry as "impregnating agents", in such fashion so as to permit all fibers in the strength member to be contacted by the impregnation agent(s), as is known in the art. The strength member is then dried such as with blown hot air so as to remove excess of the adhesive substance.
Fifthly, the combination of the strength member (with any impregnation agents) and the selected Creep Tolerant Magnetized Core, that is hereafter also optionally known the "pre-processed rope", are tensed to a predetermined tension;
Sixthly, while maintaining the tension on the pre-processed rope, a heat is applied to the entire pre-processed rope, i.e. to the combination of the strength member (with any impregnation agents) and the selected Creep Tolerant Magnetized Core contained within the strength member, where such heat is applied in such a fashion so as to cause a phase change of the thermoplastic substance forming the thermoplastic portion or portions of the selected Creep Tolerant Magnetized Core, it being preferred to cause the thermoplastic portion to reach only a semi-liquid state, and even a semi-molten state, rather than a totally molten state;
Seventhly, the tension is maintained, and in some cases may be altered, such as increased, or may be repeatedly altered, such as by being increased followed by being decreased, followed by being increased again, and so on, until the combination of the strength member (with any impregnation agents) and the selected Creep Tolerant Magnetized Core have been stretched and/or elongated a predetermined magnitude (such as a predetermined percentage greater than their length prior to being stretched), and, preferably, until the outer diameter of the pre-processed rope is between fifteen percent and forty-three percent lesser than its original outer diameter;
Eighthly, while a predetermined tension is maintained, the combination of the strength member (with any impregnation agents) and the selected Creep Tolerant Magnetized Core 2 are cooled until the thermoplastic substance of the Creep Tolerant Magnetized Core 2 returns to a solid phase.
Ninthly; optionally, and preferably, a sheath is formed about the outside of the strength member, such as a braided sheath, that may be adhered to the strength member with a highly elastic adhesive substance such as with a high elasticity polyurethane that is applied to the outside surface of the strength member immediately prior to braiding the sheath about the outside surface of the strength member.

### Methods for Using the Heat Indicating Fiber Rope of the present disclosure

Having produced the Heat Indicating Fiber Rope of the present disclosure, to use the rope in order to monitor the heat of the rope, and especially the heat at and/or near the core of the rope, the methods of the present disclosure include steps of:
First: subjecting the Heat Indicating Fiber Rope and/or selected portions of the Heat Indicating Fiber Rope to a range of temperatures, until, in each case, the rope reaches each of various distinct temperatures. A probe that can be inserted into the rope to read temperature at the boundary of the Creep Tolerant Magnetized Core 2 and the strength member surrounding it is useful.

Alternatively, but less desirably, magnets identical to those magnets contained within the rope are subjected to heat when they are not enclosed within the rope, until they reach the desired temperature, and are retained at the desired temperature for about one hour so as to ensure that the entire body of the magnet has reached such temperature.

Second: measuring a force associated with the magnet or magnets at each distinct location along the rope (such force may be magnetic force, or magnetic flux, or magnetic moment, or other). A Gaussmeter or a 3D fluxmeter is useful for measuring the magnetic moment of the magnet or magnets at each distinct location along the rope. There may be several magnets positioned at one distinct location along and within the rope, and for purposes of the present disclosure the use of one or several magnets at a specific distinct location along and within the rope is considered the same as using one magnet.

When the alternative First step is selected, the selected measured force of the magnet is measured when the magnet is not contained within the rope.
Third: recording the temperature value measured and the value of the measured specific force generated by the magnet at such temperature, for each of various temperatures selected;
Fourth; forming a database correlating any specific force value measured to a specific temperature that the rope was at when the force value was measured, for several different temperatures of the rope, and especially temperatures expected to be of importance in determining degradation of the rope, for example, such as temperatures at which a material forming fibers forming the rope degrades, as well as temperatures within a predetermined range of such degradation temperature;
Fifth: using the rope in its intended application;
Sixth: monitoring at least those portions of the rope containing distinct magnets, and specifically by measuring during use of the rope the same type of force already measured when forming the database;
Seventh: correlating the value and/or values of the measured force associated with a magnet to a temperature identified in the prior steps as a temperature that corresponds to the force value measured, thereby determining the heat value and especially the temperature of the rope at distinct locations along the rope and at and/or near the core of the rope;
Eighth: Preferably, a database is maintained of the heat values measured over time, so as to be able to monitor the heat being experienced by certain portions of the rope over time. Preferably as well, any failure or compromise of the rope detected is compared to the amount of heat input over time at specific locations of the rope so as to permit future prediction of when a rope of similar and/or same construction is likely to fail or be at risk of failure according to how much heat is being experienced by the rope at such specific location along the rope.

In some instances, it may be desired to use the Heat Indicating Fiber Rope of the present disclosure in a fashion that permits monitoring, during actual use of the rope, both the heat of the rope, and as well, additionally, any creep experienced by the rope.

In order to additionally use the Heat Indicating Fiber Rope of the present disclosure to monitor and alert operators of excessive or undesired magnitudes of creep in the Heat Indicating Fiber Rope of the present disclosure, the Heat Indicating Fiber Rope of the present disclosure is employed in such a fashion that adjacent to at least a portion of the long dimension of the Heat Indicating Fiber Rope of the present disclosure during its deployment, preferably in the vicinity of the sheave upon which the Heat Indicating Fiber Rope is travelling outboard the seismic vessel, and arranged in sequence and at predetermined spatial distances between one another, are a plurality of sensors capable of detecting the predetermined force type desired associated with the magnets and desired to be measured and correlated to the rope's temperature, including in above steps. These sensors may be any of a variety of devices cable of detecting magnets such as by detecting Halls effect, or magnetic force, or magnetic flux, magnetic fields, or any effect associated with magnets. The sensors are connected to an electronic control unit (computer).

Upon initial deployment under working load tensions of the Heat Indicating Fiber Rope of the present disclosure, the sensors detect the positions of the various magnets within the Heat Indicating Fiber Rope. These positions are logged by the control unit as predetermined locations having specific distance intervals between themselves along the long dimension of the Heat Indicating Fiber Rope of the present disclosure, each of which specific distance intervals preferably is identifiable by the RFID tag associated with it by virtue of having been positioned between subsequent super magnets or other magnets.

In order to ascertain magnitudes of creep of the various distance intervals between the predetermined locations, the positions of the various magnets are monitored and the specific distance intervals between them measured and recorded. The control unit keeps record of the distance measured for each of the specific distance intervals over time. When a distance interval elongates, the control until sends an alarm or alert. The control unit is programmed so as to be able to provide a constant report of the progressive creep of the various distance intervals along the long dimension of the superwide.

That portion of the Heat Indicating Fiber Rope in the vicinity of the sheave from which the superwide exits outboard the vessel, and especially between the winch or drum that pulls upon the superwide to just outboard the sheave, is constantly being monitored by an appropriately configured sensor system coupled to the control unit.

When the Heat Indicating Fiber Rope is being payed out or retrieved, it must pass the sensors, that transmit to the control unit information permitting the control unit to monitor creep along those portions of the Heat Indicating Fiber Rope that are far from the sheave.

The control unit calculates creep and/or other elongation experienced by distinct regions corresponding to distinct distance intervals situated along the Heat Indicating Fiber Rope of the present disclosure. When RFIDs are used between subsequent super magnets, for example, the control unit identifies specific distance intervals through the RFID associated with same. When no RFIDs are used in the Creep Tolerant Magnetized Core, the control unit counts up and down, along the long length of the Heat Indicating Fiber Rope, to thereby keep track of distinct specific distance intervals. Upon sensing a predetermined amount of linear length increase in such distance intervals, the control unit is programmed to send a warning alarm to operators of the seismic surveillance vessel, thereby alerting operators of the likely failure of the Heat Indicating Fiber Rope of the present disclosure prior to such failure occurring as a result of creep. Thus, catastrophic failures of the superwide are avoided, minimizing economic losses and fatalities, the objects of the present disclosure thereby being attained.

### Alternative Embodiments:

FIG. 4 shows a side plan view of an assembly 22 of spatially arranged magnets 5 and 6 coupled to a line 23. The line may be a thread, yarn, filament, tape or other. The line preferably is formed of the same substance that is formed the plastic portion 3 or 10 of the Creep Tolerant Magnetized Cores 2 and 7. The magnets may be coupled to the line by means of an adhesive, or any other means. The magnets are preferably aligned as to their polarity so as to provide the magnets a predetermined alignment relative to their north and south poles and relative to the long axis of the finished rope, prior to being affixed to the line. Upon completion of the assembly 22, the assembly 22 may be fed through an extruder that is extruding the molten thermoplastic in forming plastic rod 3. As a result, is formed an embodiment of a Creep Tolerant Magnetized Core.

### Industrial Applicability:

The processes taught herein to make and use a Heat Indicating Fiber Rope of the present disclosure can be used to make a high strength synthetic rope of the present disclosure for any application for which rope is used, including towing warps, trawler warps, crane ropes, deep sea winch lines, mooring ropes, anchor ropes, well bore lines, and other.

The finished rope forming the Heat Indicating Fiber Rope of the present disclosure may also be used as a mooring rope or as a crane rope. As a mooring rope, such as for deep water and ultra-deep water rigs, the rope's heat and/or creep, and especially the rope's internal heat, is monitored about sheaves as taught above. However, to monitor creep along submerged portions of the mooring rope it is anticipated than an ROV constructed and configured with the needed sensors and control units to measure and monitor over time the lengths and changes in lengths of the specific distance intervals along the mooring rope would be employed.

Such use, construction, methods for construction, and methods for use of the Heat Indicating Fiber Rope of the present disclosure results in a Heat Indicating Fiber Rope of the present disclosure that addresses problems described herein above and addresses needs long felt in the industry.

While the present disclosure has been described in terms of its presently preferred embodiments, others, no doubt, having read the instant disclosure, shall suggest various alternatives and variations, which are intended to be encompassed by the present disclosure and the claims of the present disclosure.

## Claims

1. A method for ascertaining the temperature of a portion of a rope having a strength member formed mainly from synthetic fibers, the method **characterized by** steps of:
a) forming the rope so that it includes at each of various distinct locations along the length of the rope and included within a centrally located creep tolerant rod dimensioned to fill out the centrally located space of the hollow braided rope at least one of several individual magnets (5);
b) next, using the rope in a certain application;
c) next, while using the rope in the certain application, measuring a physical signal associated with at least one of the magnets (5) that is included within the rope so as to obtain a measurement associated with the signal;
d) identifying a temperature and/or temperature range by comparing the obtained measurement to previously obtained data identifying various temperature measurements and/or ranges of temperature measurements for various specific measurements of the same type of signal as measured in step (c) above.

2. The method of claim 1 wherein step (d) further comprises selecting for the previously obtained data a data obtained by measuring the same type of signal associated with a magnet (5) that is the same type of the at least one magnet (5) of step (c) of claim 1, and where the same type of magnet was also included in a portion of rope where the rope construction parameters are same as the rope construction parameters of the rope of claim 1 and where the position within the rope of the same type of magnet is same as the position of the at least one magnet of step (c) of claim 1 within the rope of claim 1.

3. The method of any one of claims 1 or 2 wherein the method further comprises selecting magnetic flux for the type of signal.

4. The method of any one of claims 1 or 2 wherein the method further comprises selecting magnetic moment for the type of signal.

5. The method of any one of claims 1 to 4 above further comprising selecting to position one magnet selected from the several individual magnets each at one of the various distinct locations, and further comprising selecting to measure the signal associated with the at least one magnet by measuring the signal associated with each of the one magnets each positioned at one of the various distinct locations.

6. The method of any one of the above claims where the rope is a superwide used in seismic surveillance applications.

7. The method of any one of the above claims further comprising selecting to situate the individual magnets at distinct locations that are situated centrally within the rope and parallel to the long dimension of the rope and within the centrally located creep tolerant rod.

8. The method of claim 7 further comprising selecting to situate at least some and preferably all of the magnets (5) within the rope so that an individual magnet (5) is oriented so that an imaginary straight line bisecting the north and south poles of the (5) magnet is perpendicular to the long axis and/or long length of the rope.

9. The method of claim 7 further comprising selecting to situate at least some and preferably all of the magnets (5) within the rope so that an individual magnet (5) is oriented so that an imaginary straight line bisecting the north and south poles of the (5) magnet is parallel to the long axis and/or long length of the rope.

10. The method of any of the above claims further comprising selecting to retain a probe and/or other sensor of the meter used to measure the force at a same predetermined distance from the exterior surface of the portion of the rope.

11. The method of any one of claims 1 to 10 further comprising selecting to pair each distinct location with a distinct RFID capable of being read and conveying distinct information about where along the length of the rope is positioned the RFID and/or about the properties of the magnet at that distinct location.

12. The method of claim 1 further comprising steps of:
e) generating a database by steps including:
i) subjecting at least portions of the rope including at least one and preferably several of the distinct locations to heat and/or cold so as to cause at least portions of the rope including at least one and preferably many of the distinct locations to be a specific temperature;
ii) while maintaining the at least a portion of the rope at the specific temperature, measuring a signal associated with the magnet and/or magnets associated with at least one of the various distinct locations and recording the signal measured at the specific temperature;
iii) selecting to subject the rope to a different specific temperature compared to the specific temperature in steps (i) and (ii) above, and otherwise selecting to repeat steps (i) and (ii) above at the different specific temperature;
iv) selecting to repeat step (iii) above while each time selecting a unique specific temperature so as to obtain measurements at a range of temperatures in increments of for example one degree increments, thereby obtaining a data base of measurements identifying various temperature measurements and/or ranges of temperature measurements for various specific measurements of the same type of signal as measured in step a(iii) above;
f) next, using in a certain application a rope selected from a group consisting of:
(i) the rope formed in claim 1; and
(ii) at least another rope that is formed with same construction parameters as the rope formed in claim 1;
g) next, while using the selected rope selected in the certain application, measuring a signal associated with at least one of the magnets that is included within the rope and that is the same type of signal as measured in step (a) (i) to (a) (iv) above so as to obtain a measurement associated with the signal;
h) identifying a temperature and/or temperature range by comparing the obtained measurement from step (c) to the data base of previously obtained measurements identifying various temperature measurements and/or ranges of temperature measurements for various specific measurements of the same type of signal as measured in step (a) (i) to (a) (iv) above.

13. The method of any of the above claims where the method further includes steps of forming the rope comprising:
i) situating an actuator (31) proximal the braid point of a braiding machine;
j) situating at least one magnet (5) at a head (32) of the actuator;
k) while forming with the braiding machine a hollow braided sheath, inserting at least the at least one magnet into an open end of the hollow braided sheath being formed, and selecting for the open end of the hollow braided sheath an end near the braiding machine's braid point;
l) allowing the magnet to become grasped by the interior surface of the hollow braided sheath;
m) causing the actuator to become removed from the hollow braided sheath; and
n) repeating steps (j) through (m) above.

14. The method of claim 13 further comprising selecting to form at least the actuator head (32) as a temporary magnet, and with a shape capable of retaining a selected magnet, and further selecting to energize the actuator head (32) at least long enough to cause the magnet (5) situated within the actuator head to adopt a specific orientation relative to the magnet's north and south poles, prior to step (c) of claim 13.

15. The method of claim 1 further comprising steps of:
a) generating a database by steps including:
i) subjecting at least portions of the rope including at least one and preferably several of the distinct locations to heat and/or cold so as to cause at least portions of the rope including at least one and preferably many of the distinct locations to be at a specific temperature, and measuring said specific temperature;
ii) while maintaining the at least a portion of the rope at the specific temperature measuring a signal associated with the magnet and/or magnets associated with at least one of the various distinct locations and recording the signal measured at the specific temperature;
iii) subjecting the rope to a different specific temperature compared to the specific temperature in steps (i) and (ii) above, and repeating steps (i) and (ii) above at the different specific temperature;
iv) repeating step (iii) above while each time selecting a unique specific temperature so as to obtain measurements at a range of temperatures in increments of for example one degree increments, thereby obtaining a database of measurements identifying various temperature measurements and/or ranges of temperature measurements correlated to measurements of the signal as measured in step (a) (ii) above;
b) next, using in a certain application a rope selected from a group consisting of:
(i) the rope used in step (a) above; and
(ii) at least another rope that is formed with same construction parameters as the rope used in step (a) above;
c) next, while using the selected rope selected in the certain application, measuring a signal associated with at least one of the magnets that is included within the rope and that is the same type of signal as measured in step (a) (ii) so as to obtain a measurement associated with the signal;
d) identifying a temperature and/or temperature range by comparing the obtained measurement from step (c) to the database of previously obtained measurements identifying various temperature measurements and/or ranges of temperature measurements correlated with measurements of the same signal as measured in step (a) (ii) above.

## Patentansprüche

1. Verfahren zum Ermitteln der Temperatur eines Abschnitts eines Seils, das ein Festigkeitselement aufweist, das hauptsächlich aus synthetischen Fasern gebildet ist, wobei das Verfahren **gekennzeichnet ist durch** die folgenden Schritte:
a) Bilden des Seils derart, dass es an jeder von verschiedenen unterschiedlichen Stellen entlang der Länge des Seils und eingeschlossen in einem mittig angeordneten, kriechtoleranten Stab enthalten ist, der derart dimensioniert ist, dass er den mittig angeordneten Raum des hohlen, geflochtenen Seils ausfüllt, mindestens einen von mehreren einzelnen Magneten (5) enthält;
b) anschließend Verwenden des Seils in einer bestimmten Anwendung;
c) anschließend während des Verwendens des Seils in der bestimmten Anwendung Messen eines physikalischen Signals, das mindestens einem der Magneten (5), die in dem Seil enthalten sind, zugeordnet ist, um eine Messung zu erhalten, die dem Signal zugeordnet ist;
d) Identifizieren einer Temperatur und/oder eines Temperaturbereichs durch Vergleichen der erhaltenen Messung mit vorher erhaltenen Daten, die verschiedene Temperaturmessungen und/oder Bereiche von Temperaturmessungen für verschiedene spezifische Messungen desselben Signaltyps, wie oben im obigen Schritt (c) gemessen, identifizieren.

2. Verfahren nach Anspruch 1, wobei Schritt (d) ferner das Auswählen von Daten, die durch Messen desselben Signaltyps, der einem Magneten (5) zugeordnet ist, der demselben Typ des mindestens einen Magneten (5) von Schritt (c) von Anspruch 1 entspricht, für die vorher erhaltenen Daten umfasst, und wobei derselbe Typ von Magnet auch in einem Seilabschnitt enthalten war, in dem die Seilkonstruktionsparameter dieselben sind wie die Seilkonstruktionsparameter des Seils von Anspruch 1, und wobei die Position in dem Seil desselben Typs von Magneten dieselbe ist wie die Position des mindestens einen Magneten von Schritt (c) von Anspruch 1 in dem Seil von Anspruch 1.

3. Verfahren nach einem der Ansprüche 1 oder 2, wobei das Verfahren ferner das Auswählen des magnetischen Flusses für den Signaltyp umfasst.

4. Verfahren nach einem der Ansprüche 1 oder 2, wobei das Verfahren ferner das Auswählen des magnetischen Moments für den Signaltyp umfasst.

5. Verfahren nach einem der obigen Ansprüche 1 bis 4, das ferner das Auswählen umfasst, um einen Magneten, der aus den mehreren einzelnen Magneten ausgewählt wird, jeweils an einer der verschiedenen unterschiedlichen Stellen zu positionieren, und ferner das Auswählen umfasst, um das Signal zu messen, das dem mindestens einen Magneten zugeordnet ist, durch Messen des Signals, das jedem des einen Magneten, der jeweils an einer der verschiedenen, unterschiedlichen Stellen positioniert ist, zugeordnet ist.

6. Verfahren nach einem der oben genannten Ansprüche, wobei das Seil ein superbreites Seil ist, das in seismischen Überwachungsanwendungen verwendet wird.

7. Verfahren nach einem der oben genannten Ansprüche, das ferner das Auswählen umfasst, um die einzelnen Magneten an unterschiedlichen Stellen unterzubringen, die mittig in dem Seil und parallel zu der langen Abmessung des Seils und in dem mittig angeordneten kriechtoleranten Stab untergebracht sind.

8. Verfahren nach Anspruch 7, das ferner das Auswählen umfasst, um zumindest einige und bevorzugt alle der Magneten (5) in dem Seil derart unterzubringen, dass ein einzelner Magnet (5) derart ausgerichtet ist, dass eine imaginäre gerade Linie, die den Nord- und den Südpol des Magneten (5) teilt, senkrecht zu der langen Achse und/oder langen Länge des Seils ist.

9. Verfahren nach Anspruch 7, das ferner das Auswählen umfasst, um zumindest einige und bevorzugt alle der Magneten (5) in dem Seil derart unterzubringen, dass ein einzelner Magnet (5) derart ausgerichtet ist, dass eine imaginäre gerade Linie, die den Nord- und den Südpol des Magneten (5) teilt, parallel zu der langen Achse und/oder langen Länge des Seils ist.

10. Verfahren nach einem der obigen Ansprüche, das ferner das Auswählen umfasst, um eine Sonde und/oder einen anderen Sensor des Messgeräts, das verwendet wird, um die Kraft zu messen, an derselben vorbestimmten Entfernung von der äußeren Oberfläche des Abschnitts des Seils zu halten.

11. Verfahren nach einem der Ansprüche 1 bis 10, das ferner das Auswählen umfasst, jede unterschiedliche Stelle mit einem unterschiedlichen RFID paarweise anzuordnen, das in der Lage ist ausgelesen zu werden und unterschiedliche Informationen, wo entlang des Seils das RFID positioniert ist und/oder über die Eigenschaften des Magneten an den unterschiedlichen Stellen zu übermitteln.

12. Verfahren nach Anspruch 1, das ferner die folgenden Schritte umfasst:
e) Erzeugen eines Datensatzes durch Schritte, die Folgendes enthalten:
i) Beaufschlagen zumindest von Abschnitten des Seils, die mindestens einen und bevorzugt mehrere der unterschiedlichen Stellen enthalten, mit Wärme und/oder Kälte, um zumindest Abschnitte des Seils, die mindestens eine und bevorzugt mehrere unterschiedliche Stellen enthalten, zu veranlassen, eine spezifische Temperatur aufzuweisen;
ii) während des Haltens des mindestens einen Abschnitts des Seils auf der spezifischen Temperatur, Messen eines Signals, das dem Magnet und/oder den Magneten zugeordnet ist, die der mindestens einen der verschiedenen unterschiedlichen Stellen zugeordnet sind, und Aufzeichnen des Signals, das bei der spezifischen Temperatur gemessen worden ist;
iii) Auswählen, um das Seil einer anderen spezifischen Temperatur im Vergleich zu der spezifischen Temperatur in den obigen Schritten (i) und (ii) auszusetzen, und sonst Auswählen, um die obigen Schritte (i) und (ii) bei der anderen spezifischen Temperatur zu wiederholen;
iv) Auswählen, um den obigen Schritt (iii) zu wiederholen, wobei jedes Mal eine eindeutige spezifische Temperatur ausgewählt wird, um Messungen in einem Bereich von Temperaturen in Schritten von beispielsweise einem Grad zu erhalten, dadurch Erhalten eines Datensatzes von Messungen, die verschiedene Temperaturmessungen und/oder Bereiche von Temperaturmessungen für verschiedene spezifische Messungen desselben Signaltyps wie im obigen Schritt (iii) gemessen, identifizieren;
f) anschließend Verwenden eines Seils, das aus einer Gruppe ausgewählt wird, die aus Folgendem besteht, in einer bestimmten Anwendung:
(i) das Seil, das in Anspruch 1 gebildet wird; und
(ii) mindestens ein weiteres Seil, das mit denselben Konstruktionsparametern wie das Seil, das in Anspruch 1 gebildet wird, gebildet wird;
g) anschließend während des Verwendens des ausgewählten Seils, das in der bestimmten Anwendung ausgewählt worden ist, Messen eines Signals, das mindestens einem der Magneten zugeordnet ist, der in dem Seil enthalten ist, und der demselben Signaltyp entspricht, wie in obigen Schritten (a) (i) bis (a) (iv) gemessen worden ist, um eine Messung zu erhalten, die dem Signal zugeordnet ist.
h) Identifizieren einer Temperatur und/oder eines Temperaturbereichs durch Vergleichen der erhaltenen Messung von Schritt (c) mit dem Datensatz von vorher erhaltenen Messungen, die verschiedene Temperaturmessungen und/oder Bereiche von Temperaturmessungen für verschiedene spezifische Messungen desselben Signaltyps, wie in obigen Schritten (a)(i) bis (a)(iv) gemessen, identifizieren.

13. Verfahren nach einem der oben genannten Ansprüche, wobei das Verfahren ferner die Schritte des Bildens des Seils enthält:
i) Anordnen eines Aktors (31) in der Nähe des Flechtpunkts einer Flechtmaschine;
j) Anordnen mindestens eines Magneten (5) an einem Kopf (32) des Aktors;
k) während des Bildens eines hohlen geflochtenen Mantels mit der Flechtmaschine, Einsetzen mindestens eines des mindestens einen Magneten in ein offenes Ende des gebildeten hohlen geflochtenen Mantels, und Auswählen des hohlen geflochtenen Mantels ein Ende, das in der Nähe des Flechtpunkts der Flechtmaschine liegt, für das offene Ende ;
l) Erlauben, dass der Magnet durch die Innenfläche des hohlen geflochtenen Mantels, ergriffen wird;
m) Veranlassen des Aktors, aus dem hohlen geflochtenen Mantel entfernt zu werden; und
n) Wiederholen der obigen Schritte (j) bis (m).

14. Verfahren nach Anspruch 13, das Ferner das Auswählen umfasst, um zumindest den Aktorkopf (32) als einen temporären Magneten und mit einer Form, die in der Lage ist, einen ausgewählten Magneten zu halten, zu bilden, und ferner Auswählen, um den Aktorkopf (32) zumindest lange genug mit Leistung zu versorgen, um den Magneten (5), der sich in dem Aktorkopf befindet, zu veranlassen, eine spezifische Ausrichtung relativ zu dem Nord- und Südpol des Magneten anzunehmen, vor Schritt (c) von Anspruch 13.

15. Verfahren nach Anspruch 1, das ferner die folgenden Schritte umfasst:
a) Erzeugen eines Datensatzes durch Schritte, die Folgendes enthalten:
i) Beaufschlagen zumindest von Abschnitten des Seils, die mindestens einen und bevorzugt mehrere der unterschiedlichen Stellen enthalten, mit Wärme und/oder Kälte, um zumindest Abschnitte des Seils, die mindestens eine und bevorzugt mehrere unterschiedliche Stellen enthalten, zu veranlassen, eine spezifische Temperatur aufzuweisen, und Messen der spezifischen Temperatur;
ii) während des Haltens des mindestens einen Abschnitts des Seils auf der spezifischen Temperatur, Messen eines Signals, das dem und/oder den Magneten zugeordnet ist, die dem mindestens einen der verschiedenen unterschiedlichen Stellen zugeordnet sind, und Aufzeichnen des Signals, das bei der spezifischen Temperatur gemessen worden ist;
iii) Beaufschlagen des Seils mit einer anderen spezifischen Temperatur im Vergleich zu der spezifischen Temperatur in den obigen Schritten (i) und (ii), und Wiederholen der obigen Schritte (i) und (ii) bei der anderen spezifischen Temperatur;
iv) Wiederholen des obigen Schrittes (iii), wobei jedes Mal eine eindeutige spezifische Temperatur ausgewählt wird, um Messungen in einem Bereich von Temperaturen in Schritten von beispielsweise einem Grad zu erhalten, dadurch Erhalten eines Datensatzes von Messungen, die verschiedene Temperaturmessungen und/oder Bereiche von Temperaturmessungen, die mit Messungen des Signals wie im obigen Schritt (iii) gemessen, korreliert sind;
b) anschließend Verwenden eines Seils, das aus einer Gruppe ausgewählt wird, die aus Folgendem besteht, in einer bestimmten Anwendung:
(i) das Seil, das im obigen Schritt (a) verwendet wird; und
(ii) mindestens ein weiteres Seil, das mit denselben Konstruktionsparametern wie das Seil, das im obigen Schritt (a) verwendet wird, gebildet wird;
c) anschließend während des Verwendens des ausgewählten Seils, das in der bestimmten Anwendung ausgewählt worden ist, Messen eines Signals, das mindestens einem der Magneten zugeordnet ist, der in dem Seil enthalten ist, und das demselben Signaltyp entspricht, wie in Schritt (a)(ii) gemessen worden ist, um eine Messung zu erhalten, die dem Signal zugeordnet ist;
d) Identifizieren einer Temperatur und/oder eines Temperaturbereichs durch Vergleichen der erhaltenen Messung von Schritt (c) mit dem Datensatz von vorher erhaltenen Messungen, die verschiedene Temperaturmessungen und/oder Bereiche von Temperaturmessungen identifizieren, die mit Messungen desselben Signals, wie im obigen Schritt (a) (ii) gemessen, korrelieren.

## Revendications

1. Procédé de détermination de la température d'une portion d'un cordage ayant un élément de résistance formé principalement à partir de fibres synthétiques, le procédé étant **caractérisé par** les étapes consistant à :
a) former le cordage de sorte qu'il inclue au niveau de chaque emplacement parmi divers emplacements distincts le long de la longueur du cordage et inclus à l'intérieur d'une tige tolérante au fluage située de façon centrale dimensionnée pour remplir l'espace situé de façon centrale du cordage tressé creux au moins un aimant parmi plusieurs aimants individuels (5) ;
b) ensuite, utiliser le cordage dans une certaine application ;
c) ensuite, tout en utilisant le cordage dans la certaine application, mesurer un signal physique associé à au moins l'un des aimants (5) qui est inclus à l'intérieur du cordage de façon à obtenir une mesure associée au signal ;
d) identifier une température et/ou plage de température en comparant la mesure obtenue à des données obtenues précédemment identifiant diverses mesures de température et/ou plages de mesures de température pour diverses mesures spécifiques du même type de signal tel que mesuré à l'étape (c) ci-dessus.

2. Procédé selon la revendication 1 dans lequel l'étape (d) comprend en outre la sélection pour les données obtenues précédemment d'une donnée obtenue en mesurant le même type de signal associé à un aimant (5) qui est le même type que celui de l'au moins un aimant (5) de l'étape (c) selon la revendication 1, et où le même type d'aimant a également été inclus dans une portion de cordage où les paramètres de construction de cordage sont les mêmes que les paramètres de construction de cordage du cordage selon la revendication 1 et où la position à l'intérieur du cordage du même type d'aimant est la même que la position de l'au moins un aimant de l'étape (c) selon la revendication 1 à l'intérieur du cordage selon la revendication 1.

3. Procédé selon l'une quelconque des revendications 1 ou 2, le procédé comprenant en outre la sélection d'un flux magnétique pour le type de signal.

4. Procédé selon l'une quelconque des revendications 1 ou 2, le procédé comprenant en outre la sélection d'un moment magnétique pour le type de signal.

5. Procédé selon l'une quelconque des revendications 1 à 4 ci-dessus comprenant en outre la sélection de positionner un aimant sélectionné parmi les plusieurs aimants individuels chacun au niveau d'un emplacement parmi divers emplacements distincts, et comprenant en outre la sélection de mesurer le signal associé à l'au moins un aimant en mesurant le signal associé à chaque aimant parmi les aimants positionnés chacun au niveau d'un emplacement parmi les divers emplacements distincts.

6. Procédé selon l'une quelconque des revendications précédentes où le cordage est un superlarge utilisé dans des applications de surveillance sismique.

7. Procédé selon l'une quelconque des revendications précédentes comprenant en outre la sélection de situer les aimants individuels au niveau d'emplacements distincts qui sont situés de façon centrale à l'intérieur du cordage et parallèles à la dimension longue du cordage et à l'intérieur de la tige tolérante au fluage située de façon centrale.

8. Procédé selon la revendication 7 comprenant en outre la sélection de situer au moins certains des, et préférablement tous les, aimants (5) à l'intérieur du cordage de sorte qu'un aimant individuel (5) soit orienté de sorte qu'une ligne droite imaginaire coupant les pôles nord et sud de l'aimant (5) soit perpendiculaire à l'axe long et/ou à la longueur longue du cordage.

9. Procédé selon la revendication 7 comprenant en outre la sélection de situer au moins certains des, et préférablement tous les, aimants (5) à l'intérieur du cordage de sorte qu'un aimant individuel (5) soit orienté de sorte qu'une ligne droite imaginaire coupant les pôles nord et sud de l'aimant (5) soit parallèle à l'axe long et/ou à la longueur longue du cordage.

10. Procédé selon l'une quelconque des revendications précédentes comprenant en outre la sélection de retenir une sonde et/ou un autre capteur du compteur utilisé pour mesurer la force à une même distance prédéterminée de la surface extérieure de la portion du cordage.

11. Procédé selon l'une quelconque des revendications 1 à 10 comprenant en outre la sélection d'apparier chaque emplacement distinct avec une RFID distincte apte à être lue et à transporter des informations distinctes concernant l'endroit où, le long du cordage, est positionnée la RFID et/ou concernant les propriétés de l'aimant au niveau cet emplacement distinct.

12. Procédé selon la revendication 1 comprenant en outre les étapes consistant à :
e) générer une base de données par étapes incluant :
i) le fait de soumettre au moins des portions du cordage incluant au moins un et préférablement plusieurs des emplacements distincts à la chaleur et/ou au froid de façon à amener au moins des portions du cordage incluant au moins un et préférablement plusieurs des emplacements distincts à être à une température spécifique ;
ii) tout en maintenant l'au moins une portion du cordage à la température spécifique, le fait de mesurer un signal associé à l'aimant et/ou aux aimants associés à au moins l'un des divers emplacements distincts et d'enregistrer le signal mesuré à la température spécifique ;
iii) le fait de sélectionner de soumettre le cordage à une température spécifique différente comparé à la température spécifique aux étapes (i) et (ii) ci-dessus, et autrement de sélectionner de répéter les étapes (i) et (ii) ci-dessus à la température spécifique différente ;
iv) le fait de sélectionner de répéter l'étape (iii) ci-dessus tout en sélectionnant chaque fois une température spécifique unique de façon à obtenir des mesures à une plage de températures en incréments de par exemple un degré d'incréments, ce qui permet d'obtenir une base de données de mesures identifiant diverses mesures de température et/ou plages de mesures de température pour diverses mesures spécifiques du même type de signal tel que mesuré à l'étape a(iii) ci-dessus ;
f) ensuite, le fait d'utiliser, dans une certaine application, un cordage sélectionné dans un groupe constitué :
(i) du cordage formé dans la revendication 1 ; et
(ii) d'au moins un autre cordage qui est formé avec les mêmes paramètres de construction que le cordage formé dans la revendication 1 ;
g) ensuite, tout en utilisant le cordage sélectionné dans la certaine application, le fait de mesurer un signal associé à au moins l'un des aimants qui est inclus à l'intérieur du cordage et qui est le même type de signal tel que mesuré de l'étape (a) (i) à (a)(iv) ci-dessus de façon à obtenir une mesure associée au signal ;
h) identifier une température et/ou plage de température en comparant la mesure obtenue de l'étape (c) à la base de données de mesures obtenues précédemment identifiant diverses mesures de température et/ou plages de mesures de température pour diverses mesures spécifiques du même type de signal tel que mesuré de l'étape (a)(i) à (a)(iv) ci-dessus.

13. Procédé selon l'une quelconque des revendications précédentes où le procédé inclut en outre les étapes consistant à former le cordage comprenant :
i) le fait de placer un actionneur (31) à proximité du point de tresse d'une machine de tressage ;
j) le fait de situer au moins un aimant (5) au niveau d'une tête (32) de l'actionneur ;
k) tout en formant avec la machine de tressage une gaine tressée creuse, le fait d'insérer au moins l'au moins un aimant dans une extrémité ouverte de la gaine tressée creuse en train d'être formée, et de sélectionner pour l'extrémité ouverte de la gaine tressée creuse une extrémité proche du point de tresse de la machine de tressage ;
l) le fait de permettre à l'aimant d'être saisi par la surface intérieure de la gaine tressée creuse ;
m) le fait de d'amener l'actionneur à être retiré de la gaine tressée creuse ; et
n) le fait de répéter les étapes (j) à (m) ci-dessus.

14. Procédé selon la revendication 13 comprenant en outre le fait de sélectionner de former au moins la tête d'actionneur (32) en tant qu'aimant temporaire, et avec une forme capable de retenir un aimant sélectionné, et le fait de sélectionner en outre d'exciter la tête d'actionneur (32) au moins suffisamment longue pour amener l'aimant (5) situé à l'intérieur de la tête d'actionneur à adopter une orientation spécifique relativement aux pôles nord et sud de l'aimant, avant l'étape (c) selon la revendication 13.

15. Procédé selon la revendication 1 comprenant en outre les étapes consistant à :
a) générer une base de données par étapes incluant :
i) le fait de soumettre au moins des portions du cordage incluant au moins un et préférablement plusieurs des emplacements distincts à la chaleur et/ou au froid de façon à amener au moins des portions du cordage incluant au moins un et préférablement plusieurs des emplacements distincts à être à une température spécifique, et de mesurer ladite température spécifique ;
ii) tout en maintenant l'au moins une portion du cordage à la température spécifique, le fait de mesurer un signal associé à l'aimant et/ou aux aimants associés à au moins l'un des divers emplacements distincts et d'enregistrer le signal mesuré à la température spécifique ;
iii) le fait de soumettre le cordage à une température spécifique différente comparé à la température spécifique aux étapes (i) et (ii) ci-dessus, et de répéter les étapes (i) et (ii) ci-dessus à la température spécifique différente ;
iv) le fait de répéter l'étape (iii) ci-dessus tout en sélectionnant chaque fois une température spécifique unique de façon à obtenir des mesures à une plage de températures en incréments de par exemple un degré d'incréments, ce qui permet d'obtenir une base de données de mesures identifiant diverses mesures de température et/ou plages de mesures de température corrélées à des mesures du signal tel que mesuré à l'étape (a)(ii) ci-dessus ;
b) ensuite, le fait d'utiliser, dans une certaine application, un cordage sélectionné dans un groupe constitué :
(i) du cordage utilisé à l'étape (a) ci-dessus ; et
(ii) d'au moins un autre cordage qui est formé avec les mêmes paramètres de construction que le cordage utilisé à l'étape (a) ci-dessus ;
c) ensuite, tout en utilisant le cordage sélectionné dans la certaine application, le fait de mesurer un signal associé à au moins l'un des aimants qui est inclus à l'intérieur du cordage et qui est le même type de signal tel que mesuré à l'étape (a) (ii) de façon à obtenir une mesure associée au signal ;
d) le fait d'identifier une température et/ou une plage de température en comparant la mesure obtenue de l'étape (c) à la base de données de mesures obtenues précédemment identifiant diverses mesures de température et/ou plages de mesures de température corrélées à des mesures du même signal tel que mesuré à l'étape (a)(ii) ci-dessus.
